# EUROPEAN PATENT APPLICATION

(11) **EP 3 562 159 A1**
(43) Date of publication of application: **30.10.2019**
(21) Application number: 18305510.2
(22) Date of filing: 24.04.2018
(51) Int. Cl.: H04N 19/597, H04N 19/46, G06T 9/00

(54) **METHOD, APPARATUS AND STREAM FOR VOLUMETRIC VIDEO FORMAT**

(71) Applicant: InterDigital VC Holdings, Inc., Wilmington, Delaware 19809 (US)
(72) Inventor: DORE, RENAUD, 35576 CESSON SEVIGNE CEDEX (FR); BRIAND, GERARD, 35576 CESSON SEVIGNE CEDEX (FR); FLEUREAU, JULIEN, 35576 CESSON SEVIGNE CEDEX (FR); THUDOR, FRANCK, 35576 CESSON SEVIGNE CEDEX (FR)
(74) Representative: Huchet, Anne

(57) **Abstract**

Methods and device for encoding/decoding data representative of a 3D scene. The 3D scene is represented with an image comprising data representative of texture of the background of the 3D scene and with points of a 3D point cloud that represents at least a foreground object of the 3D scene as seen from a plurality of viewpoints of a range of points of view. In a first operation, at least an area of the image that is occluded by a projection of the points according to the plurality of viewpoints is obtained. In a second operation, data representative of texture of pixels of the image, except for pixels belonging to the at least an area, is encoded. In a third operation, data representative of attributes of points of at least a part of the 3D point cloud is encoded in pixels belonging to the at least an area.

## Description

### 1. Technical field

The present disclosure relates to the domain of volumetric video content. The present disclosure is also understood in the context of the encoding and/or the formatting of the data representative of the volumetric content, for example for the rendering on end-user devices such as mobile devices or Head-Mounted Displays.

### 2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, these statements are to be read in this light, and not as admissions of prior art.

Recently there has been a growth of available large field-of-view content (up to 360°). Such content is potentially n ot fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

Immersive video, also called 360° flat video, allows the user to watch all around himself through rotations of his head around a still point of view. Rotations only allow a 3 Degrees of Freedom (3DoF) experience. Even if 3DoF video is sufficient for a first omnidirectional video experience, for example using a Head-Mounted Display device (HMD), 3DoF video may quickly become frustrating for the viewer who would expect more freedom, for example by experiencing parallax. In addition, 3DoF may also induce dizziness because of a user never only rotates his head but also translates his head in three directions, translations which are not reproduced in 3DoF video experiences.

A large field-of-view content may be, among others, a three-dimension computer graphic imagery scene (3D CGI scene), a point cloud or an immersive video. Many terms might be used to design such immersive videos: Virtual Reality (VR), 360, panoramic, 4π steradians, immersive, omnidirectional or large field of view for example.

Volumetric video (also known as 6 Degrees of Freedom (6DoF) video) is an alternative to 3DoF video. When watching a 6DoF video, in addition to rotations, the user can also translate his head, and even his body, within the watched content and experience parallax and even volumes. Such videos considerably increase the feeling of immersion and the perception of the scene depth and prevent from dizziness by providing consistent visual feedback during head translations. The content is created by the means of dedicated sensors allowing the simultaneous recording of color and depth of the scene of interest. The use of rig of color cameras combined with photogrammetry techniques is a common way to perform such a recording.

While 3DoF videos comprise a sequence of images resulting from the un-mapping of texture images (e.g. spherical images encoded according to latitude/longitude projection mapping or equirectangular projection mapping), 6DoF video frames embed information from several points of views. They can be viewed as a temporal series of point clouds resulting from a three-dimension capture. Two kinds of volumetric videos may be considered depending on the viewing conditions. A first one (i.e. complete 6DoF) allows a complete free navigation within the video content whereas a second one (aka. 3DoF+) restricts the user viewing space to a limited volume, allowing limited translation of the head and parallax experience. This second context is a valuable trade-off between free navigation and passive viewing conditions of a seated audience member.

3DoF videos may be encoded in a stream as a sequence of rectangular color images generated according to a chosen projection mapping (e.g. cubical projection mapping, pyramidal projection mapping or equirectangular projection mapping). This encoding has the advantage to make use of standard image and video processing standards. 3DoF+ and 6DoF videos require additional data to encode the depth of colored points of point clouds. The kind of rendering (i.e. 3DoF or volumetric rendering) for a volumetric scene is not known a priori when encoding the scene in a stream. Up to date, streams are encoded for one kind of rendering or the other. There is a lack of a stream, and associated methods and devices, that can carry data representative of a volumetric scene that can be encoded at once and decoded either as a 3DoF video or as a volumetric video (3DoF+ or 6DoF).

Moreover, the amount of data to be transported for e.g. the rendering on end-user devices may be very important, increasing significantly the needs in bandwidth over networks.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of encoding data representative of a 3D scene, the 3D scene being represented with an image comprising data representative of texture of the background of the 3D scene and with points of a 3D point cloud, the 3D point cloud representing at least a foreground object of the 3D scene as seen from a plurality of viewpoints of a range of points of view, the method comprising:
- obtaining at least an area of the image occluded by a projection of the points according to a plurality of viewpoints;
- encoding data representative of texture of pixels of the image except for pixels belonging to the at least an area;
- encoding data representative of attributes of points of at least a part of the 3D point cloud in pixels belonging to the at least an area.

The present disclosure relates to a device configured to encode data representative of a 3D scene, the 3D scene being represented with an image comprising data representative of texture of the background of the 3D scene and with points of a 3D point cloud, the 3D point cloud representing at least a foreground object of the 3D scene as seen from a plurality of viewpoints of a range of points of view, the device comprising a memory associated with at least one processor configured to:
- obtain at least an area of the image occluded by a projection of the points according to a plurality of viewpoints;
- encode data representative of texture of pixels of the image except for pixels belonging to the at least an area;
- encode data representative of attributes of points of at least a part of the 3D point cloud in pixels belonging to the at least an area.

The present disclosure relates to a device configured to encode data representative of a 3D scene, the 3D scene being represented with an image comprising data representative of texture of the background of the 3D scene and with points of a 3D point cloud, the 3D point cloud representing at least a foreground object of the 3D scene as seen from a plurality of viewpoints of a range of points of view, the device comprising:
- an obtainer configured to obtain at least an area of the image occluded by a projection of the points according to a plurality of viewpoints;
- encode data representative of texture of pixels of the image except for pixels belonging to the at least an area;
- encode data representative of attributes of points of at least a part of the 3D point cloud in pixels belonging to the at least an area.

The present disclosure relates to a device configured to encode data representative of a 3D scene, the 3D scene being represented with an image comprising data representative of texture of the background of the 3D scene and with points of a 3D point cloud, the 3D point cloud representing at least a foreground object of the 3D scene as seen from a plurality of viewpoints of a range of points of view, the device comprising:
- means for obtaining at least an area of the image occluded by a projection of the points according to a plurality of viewpoints;
- means for encoding data representative of texture of pixels of the image except for pixels belonging to the at least an area;
- means for encoding data representative of attributes of points of at least a part of the 3D point cloud in pixels belonging to the at least an area.

According to a particular characteristic, the data representative of attributes comprises depth information and/or texture information.

According to a specific characteristic, the data representative of attributes is obtained according to parameters representative of a two-dimensional parametrization of the at least a part of the 3D point cloud, the two-dimensional parametrization being responsive to geometric information associated with the at least a part of the 3D point cloud and to pose information associated with at least a viewpoint of the plurality of viewpoints.

According to another specific characteristic, the data representative of attributes of the points of the 3D point cloud but the points of the at least a part of the 3D point cloud is encoded in at least a patch atlas, the at least a patch atlas comprising patches, each patch comprising a part of the attributes, each patch being associated with a part of the 3D point cloud.

According to a further specific characteristic, a mapping information representative of a mapping between an information identifying the at least a part of the 3D point cloud to the pixels belonging to the at least an area is encoded.

The present disclosure relates to a method of decoding data representative of a 3D scene, the method comprising:
- decoding data representative of texture from pixels of an image except for pixels belonging to at least an area of the image, the data representative of texture corresponding to texture information of the background of a 3D scene, the at least an area corresponding to at least a part of the image occluded by a projection of points of a 3D point cloud, the 3D point cloud representing at least a foreground object of the 3D scene as seen from a plurality of viewpoints of a range of points of view;
- decoding data representative of attributes of points of at least a part of the 3D point cloud from pixels belonging to the at least an area.

The present disclosure relates to a device configured to decode data representative of a 3D scene, the device comprising a memory associated with at least one processor configured to:
- decode data representative of texture from pixels of an image except for pixels belonging to at least an area of the image, the data representative of texture corresponding to texture information of the background of a 3D scene, the at least an area corresponding to at least a part of the image occluded by a projection of points of a 3D point cloud, the 3D point cloud representing at least a foreground object of the 3D scene as seen from a plurality of viewpoints of a range of points of view;
- decode data representative of attributes of points of at least a part of the 3D point cloud from pixels belonging to the at least an area.

The present disclosure relates to a device configured to decode data representative of a 3D scene, the device comprising:
- a decoder configured to decode data representative of texture from pixels of an image except for pixels belonging to at least an area of the image, the data representative of texture corresponding to texture information of the background of a 3D scene, the at least an area corresponding to at least a part of the image occluded by a projection of points of a 3D point cloud, the 3D point cloud representing at least a foreground object of the 3D scene as seen from a plurality of viewpoints of a range of points of view;
- a decoder configured to decode data representative of attributes of points of at least a part of the 3D point cloud from pixels belonging to the at least an area.

The present disclosure relates to a device configured to decode data representative of a 3D scene, the device comprising:
- means for decoding data representative of texture from pixels of an image except for pixels belonging to at least an area of the image, the data representative of texture corresponding to texture information of the background of a 3D scene, the at least an area corresponding to at least a part of the image occluded by a projection of points of a 3D point cloud, the 3D point cloud representing at least a foreground object of the 3D scene as seen from a plurality of viewpoints of a range of points of view;
- means for decoding data representative of attributes of points of at least a part of the 3D point cloud from pixels belonging to the at least an area.

According to a particular characteristic, the data representative of attributes comprises depth information and/or texture information.

According to a specific characteristic, at least a parameter representative of a two-dimensional parametrization of the at least a part of the 3D point cloud is decoded, the two-dimensional parametrization being responsive to geometric information associated with the at least a part of the 3D point cloud and to pose information associated with at least a viewpoint of the plurality of viewpoints.

According to another characteristic, the data representative of attributes of the points of the 3D point cloud but the points of the at least a part of the 3D point cloud is decoded from at least a patch atlas, the at least a patch atlas comprising patches, each patch comprising a part of the attributes, each patch being associated with a part of the 3D point cloud.

According to a further characteristic, a mapping information representative of a mapping between an information identifying the at least a part of the 3D point cloud to the pixels belonging to the at least an area is decoded.

The present disclosure also relates to a bitstream carrying data representative of a 3D scene, the data comprising, in a first part of an image, data representative of texture from pixels of an image except for pixels belonging to at least an area of the image, the data representative of texture corresponding to texture information of the background of a 3D scene, the at least an area corresponding to at least a second part of the image occluded by a projection of points of a 3D point cloud, the 3D point cloud representing at least a foreground object of the 3D scene as seen from a plurality of viewpoints of a range of points of view, and in at least the second part of the image, data representative of attributes of points of at least a part of the 3D point cloud from pixels belonging to the at least an area.

The present disclosure also relates to a computer program product comprising program code instructions to execute the steps of the method of encoding or decoding data representative of a 3D scene, when this program is executed on a computer.

The present disclosure also relates to a (non-transitory) processor readable medium having stored therein instructions for causing a processor to perform at least the abovementioned method of encoding or decoding data representative of a 3D scene.

### 4. List of figures

The present disclosure will be better understood, and other specific features and advantages will emerge upon reading the following description, the description making reference to the annexed drawings wherein:
- Figure 1 shows an image representing a three-dimension scene comprising a surface representation of several objects, according to a non-restrictive embodiment of the present principles;
- Figure 2 illustrates an example arrangement of viewpoints of the scene of figure 1 and visible points of this scene from different viewpoints of this arrangement, according to a non-restrictive embodiment of the present principles;
- Figure 3 shows a texture image of the points of the scene of figure 1 visible from the viewpoint of figure 2 according to an equirectangular projection mapping, according to a non-restrictive embodiment of the present principles;
- Figure 4 shows the occlusion of part(s) of the background of the 3D scene of figure 1 by foreground 3D objects, according to a non-restrictive embodiment of the present principles;
- Figure 5 shows a three-dimension (3D) model of an object of the 3D scene of figure 1 and points of a point cloud corresponding to the 3D model, according to a non-restrictive embodiment of the present principles;
- Figure 6 shows the 2D parametrization of a part of a foreground 3D object of the 3D scene of figure 1, according to a non-restrictive embodiment of the present principles;
- Figure 7 shows the embedding of data representative of part(s) of foreground objects of figure 1 within an occluded part of the background, according to a non-restrictive embodiment of the present principles;
- Figure 8 shows patch atlas comprising attribute information of points of the foreground 3D object(s) of figure 1, according to a non-restrictive embodiment of the present principles;
- Figure 9 shows an example of the encoding, transmission and decoding of a sequence of data representative of the 3D scene of figure 1, according to a non-restrictive embodiment of the present principles;
- Figure 10 shows an example of the syntax of a bitstream carrying the information and data representative of the 3D scene of figure 1, according to a non-restrictive embodiment of the present principles;
- Figure 11 shows an example architecture of a device which may be configured to implement a method or process described in relation with figures 12 and/or 13, according to a non-restrictive embodiment of the present principles;
- Figure 12 shows an example of a method for encoding data representative of the 3D scene of figure 1, implemented for example in the device of figure 11, according to a non-restrictive embodiment of the present principles;
- Figure 13 shows a method for decoding data representative of the 3D scene of figure 1, implemented for example in the device of figure 11, according to a non-restrictive embodiment of the present principles.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present description illustrates the principles of the present disclosure. It will thus be appreciated that those skilled in the art will be able to devise various arrangements that, although not explicitly described or shown herein, embody the principles of the disclosure.

According to non-limitative embodiments of the present disclosure, methods and devices to encode images of a volumetric video (also called 3DoF+ or 6DoF video), for example in one or more frames, in a container and/or in a bitstream, are disclosed. Methods and devices to decode images of a volumetric video from a stream and/or frames are also disclosed. Examples of the syntax of a bitstream for the encoding of one or more images/frames of a volumetric video are also disclosed.

According to a non-limitative aspect, the present principles will be described in reference to a first particular embodiment of a method of (and a device configured for) encoding data representative of a 3D scene into one or more frames/images of a container and/or a bitstream. The 3D scene is represented with a texture image of the background, for example a "flat" view/image of the background according to a central viewpoint, and with points of one or more point clouds representing one or more foreground objects of the 3D scene as seen from several viewpoints of a range of points of view. The range may for example be centered on the central viewpoint. The representation of the 3D scene may correspond to a combination of the image of the background with representations of foreground objects, e.g. under the form of one or more point clouds or mesh. The addition of the foreground objects on the background image occludes area(s) of the background image. The pixels of the part(s) of the image not occluded by the foreground objects are used to comprise encoded data representative of the texture of the background of the 3D scene while the pixels of the area(s) of the background image occluded by the foreground objects are used to comprise encoded data representative of attributes (e.g. depth and/or texture) of points of part(s) of the point cloud representing the foreground object(s).

Using the area(s) of a background image occluded by foreground object(s) to transport data different from the background data enables to optimize the use of the whole background image and to save bandwidth for transporting data for 3DoF+ or 6DoF representation of a 3D scene.

A corresponding method of (and a device configured for) decoding data representative of the 3D scene is also described with regard to the non-limitative aspect of the present principles.

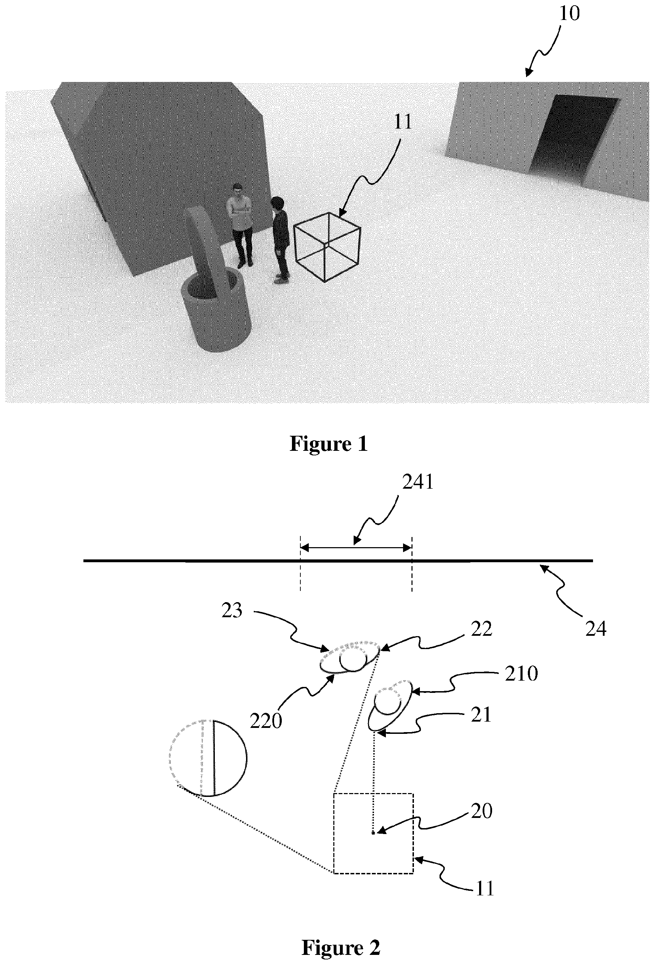

**Figure 1** shows an image representing a three-dimensional (3D) scene 10 comprising a surface representation of several objects, according to a non-restrictive embodiment of the present principles. The scene may have been acquired using any suitable technology. For example, it may have been created using computer graphics interface (CGI) tools. It may have been acquired with color and depth image acquisition devices. In such a case, it is possible that one or more parts of the objects that are not visible from the acquisition devices (e.g. cameras) may not be represented in the scene as described in relation to figure 2. The example scene illustrated in figure 1 comprises houses, two characters and a well. The cube 11 illustrates a space of view from which a user is likely to observe the 3D scene. The space of view 11 is for example centred on a first viewpoint.

The background of the 3D scene may be represented with a flat image (or a flat video, also called omnidirectional image/video) representing the 3D scene according to the first viewpoint and enabling a user (e.g. wearing a HMD) to browse into the background of the 3D scene according to 3 degrees of freedom (3Dof), i.e. with rotations around the roll, yaw and pitch axis.

One or more objects of the foreground of the 3D scene (e.g. the two characters and the well) may be represented with additional data (in addition to the texture/color data of the flat image), the additional data enabling to view the foreground objects from a plurality of viewpoints comprised in the space of view 11. The additional data may for example comprise one or any combination of the following information:
- depth information associated with the points of the foreground objects of the 3D scene viewed from the space of view 11;
- texture information (also called color information) associated with the points of the foreground objects of the 3D scene viewed from the space of view 11.

The additional data in combination with the flat video enables a 3DoF+ and/or a 6DoF browsing into at least a part of the representation of the 3D scene.

**Figure 2** shows an example arrangement of viewpoints on a scene, e.g. the 3D scene 10 of figure 1, according to a non-restrictive embodiment of the present principles. Figure 2 also shows the points of this 3D scene 10 that are visible from / according to the different points of view of this arrangement. To be rendered and displayed by an immersive rendering device (e.g. a cave or a Head Mounted Display device (HMD)), a 3D scene is considered from a first viewpoint (also called first point of view), for example the first viewpoint 20. Point 21 of the scene, corresponding to the right elbow of the first character is visible from the first point of view 20, as there is not any opaque object laying between the first point of view 20 and the scene point 21. In contrast, the point 22 of the 3D scene 10, which corresponds for example to the left elbow of the second character, is not visible from the first point of view 20, as it is occluded by points of the first character.

The area 241 of the background image 24 correspond to the part of the background image that is occluded by the foreground objects 210, 220, the area 241 comprising pixels of the background image that cannot be seen from any viewpoint of the space of view 11.

For 3DoF rendering, only one point of view, for example the first viewpoint 20, is considered. The user may rotate his head in three degrees of freedom around the first point of view to watch various parts of the 3D scene, but the user cannot move the first viewpoint. Points of the scene to be encoded in the stream are points which are visible from this first point of view. There is no need to encode points of the scene that are not visible from this first point of view as the user cannot access to them by moving the first viewpoint.

With regard to 6DoF rendering, the user may move the viewpoint everywhere in the scene. In this case, it is valuable to encode every point of the scene in the content bitstream as every point is potentially accessible by a user who can move his/her point of view. At the encoding stage, there is no means to know, a priori, from which point of view the user will observe the 3D scene 10.

With regard to 3DoF+ rendering, the user may move the point of view within a limited space around a point of view, for example around the first viewpoint 20. For example, the user may move his point of view within a cube 11 centered on the first viewpoint 20. This enables to experience parallax for the parts of the 3D scene for which geometric information is available, i.e. for the foreground objects according to the example of figure 1. Data representative of the part of the scene visible from any point of the space of view, for example the cube 11, is to be encoded into the stream, including the data representative of the 3D scene visible according to the first viewpoint 20. The size and shape of the space of view may for example be decided and determined at the encoding step and encoded in the bitstream. The decoder may obtain this information from the bitstream and the renderer limits the space of view to the space determined by the obtained information. According to another example, the renderer determines the space of view according to hardware constraints, for example in relation to capabilities of the sensor(s) that detects the movements of the user. In such a case, if, at the encoding phase, a point visible from a point within the space of view of the renderer has not been encoded in the bitstream, this point will not be rendered. According to a further example, data (e.g. texture and/or geometry) representative of every point of the 3D scene is encoded in the stream without considering the rendering space of view. To optimize the size of the stream, only a subset of the points of the scene may be encoded, for instance the subset of points that may be seen according to a rendering space of view.

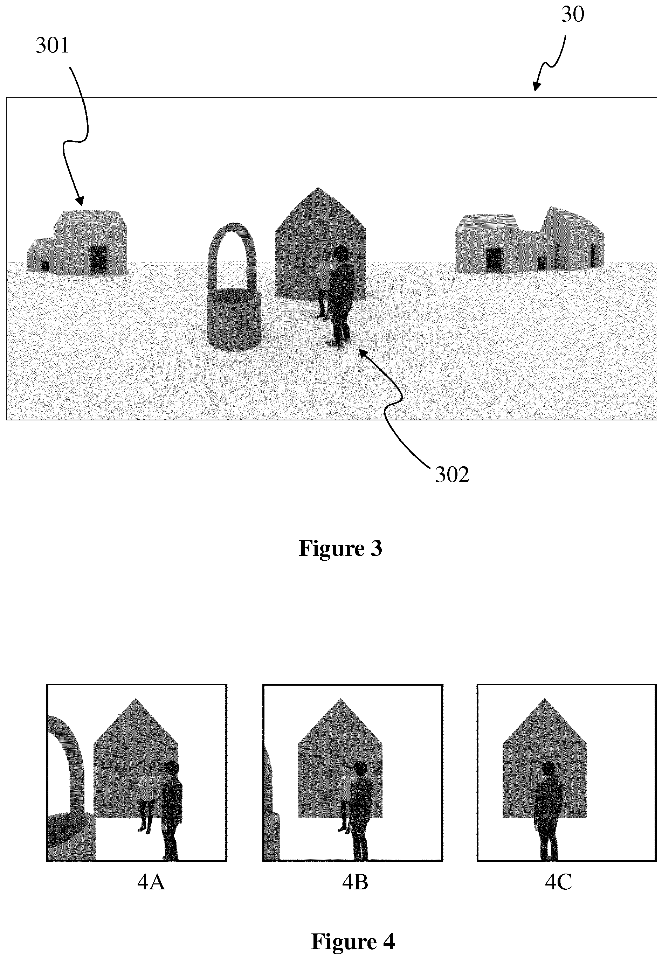

**Figure 3** shows an example of a texture image 30 (also called color image), according to a non-restrictive embodiment of the present principles. The texture image 30 comprises the texture information (e.g. RGB data or YUV data) of the points of the 3D scene 10 that are visible from the first viewpoint 20 of figure 2. This texture information may be obtained according to an equirectangular projection mapping. Equirectangular projection mapping is an example of spherical projection mapping. The texture image 30 comprises a first part 301 comprising texture data obtained from the background image and a second part 302 comprising texture data obtained by projecting the points of the foreground object onto the background image according to the first viewpoint 20.

**Figures 4A, 4B and 4C** show the occlusion of part(s) of the background of the 3D scene of figure 1 by foreground 3D objects, according to a non-restrictive embodiment of the present principles. Figure 4B illustrates the part of the scene a user could see from the first viewpoint 20 of figure 2. From this first viewpoint 20, the two characters are in a given spatial configuration, for example, the left elbow of the second character (with a white shirt) is hidden by the body of the first character while his head is visible. When the user is rotating his/her head according to the three degrees of freedom around the first viewpoint 20, this configuration does not change. If the viewpoint is fixed, the left elbow of the second character is not visible. Figure 4A illustrates the same part of the scene seen from a viewpoint located at the left side of the space of view 11 of figure 2. From such a viewpoint, the point 22 of figure 2 is visible due to the parallax effect. Therefore, for a volumetric rendering, the point 22 should be encoded into the stream. If not encoded, this point 22 will not be rendered. Figure 4C illustrates the same part of the scene observed from a viewpoint located at the right side of the space of view 11 of figure 3. From this viewpoint, the second character is almost entirely hidden by the first character. As can be seen on Figures 4A, 4B and 4C, some pixels/points of the background image cannot be seen, whatever the viewpoint.

By moving the viewpoint within the 3D scene, the user may experience the parallax effect, at least on the foreground objects.

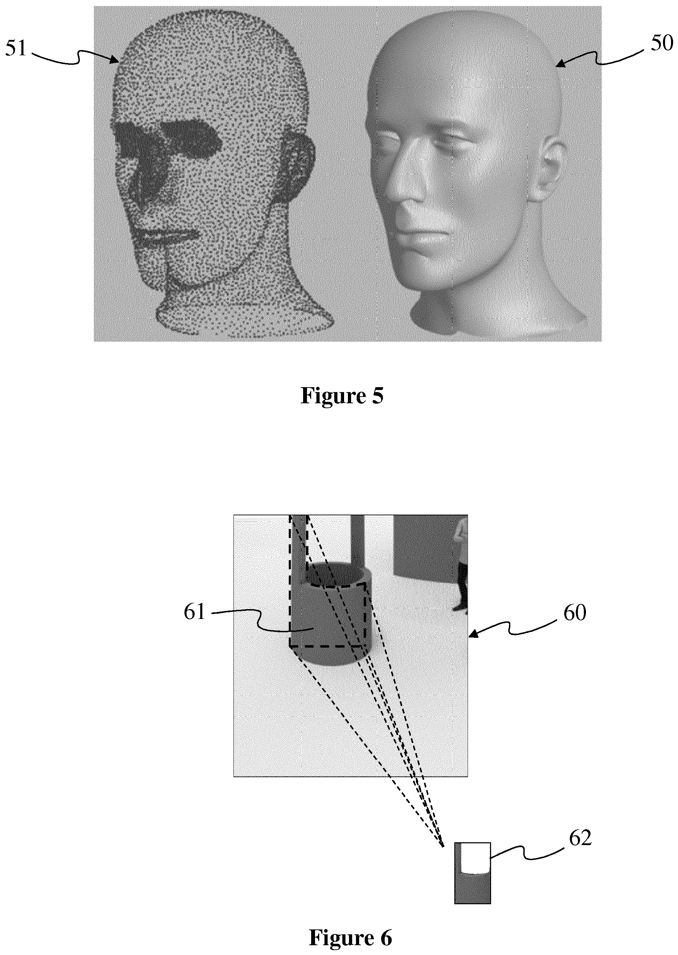

**Figure 5** shows a three-dimension (3D) model of an object 50 and points of a point cloud 51 corresponding to the 3D model 50, according to a non-restrictive embodiment of the present principles. The model 50 may be a 3D mesh representation and points of point cloud 51 may be the vertices of the mesh. Points of the point cloud 51 may also be points spread on the surface of faces of the mesh. The model 50 may also be represented as a splatted version of the point cloud 51, the surface of the model 50 being created by splatting the points of the point cloud 51. The model 50 may be represented by a lot of different representations such as voxels or splines. Figure 5 illustrates the fact that a point cloud may be defined with a surface representation of a 3D object and that a surface representation of a 3D object may be generated from a point of cloud. As used herein, projecting points of a 3D object (by extension points of a 3D scene) onto an image is equivalent to projecting any image representation of this 3D object to create an object.

A point cloud may be seen as a vector-based structure, wherein each point has its coordinates (e.g. three-dimensional coordinates XYZ, or a depth/distance from a given viewpoint) and one or more attributes, also called component. An example of component is the color component that may be expressed in various color spaces, for example RGB (Red, Green and Blue) or YUV (Y being the luma component and UV two chrominance components). The point cloud is a representation of the object as seen from a given viewpoint, or a range of viewpoints. The point cloud may be obtained by many ways, e.g.:
- from a capture of a real object shot by a rig of cameras, optionally complemented by depth active sensing device;
- from a capture of a virtual/synthetic object shot by a rig of virtual cameras in a modelling tool;
- from a mix of both real and virtual objects.

The volumetric parts of the 3D scene, i.e. the foreground objects, may for example be represented with one or several point clouds such as the point cloud 51.

**Figure 6** shows the 2D parametrization of a 3D part of a foreground 3D object of the 3D scene, only a part 60 of the 3D scene being represented on Figure 6, according to a non-restrictive embodiment of the present principle. The same process may be applied to each 3D part of the foreground objects of the 3D scene. The 2D parametrization may for example correspond to the one described in the patent application EP3249922 filed by Thomson Licensing and/or in the patent application EP17305041.0 filed by Thomson Licensing.

The points of the point cloud(s) used to represent the foreground objects of the 3D scene may be grouped to form one or more groups of points, points belonging to a same group having for example a depth information comprised in a determined range of depth (i.e. the points of a same group are depth consistent). The range of viewpoints comprised in the space of view (e.g. the cube) 11 is for example discretized into a plurality of viewpoints (e.g., 5, 10 or 20 viewpoints). According to another example, a plurality of viewpoints is obtained from the space of view 11 by defining a tetrahedron centered on the first viewpoint 20, the four vertices of the tetrahedron each defining a viewpoint of the plurality of viewpoints in addition to the first viewpoint 20. The points of the point cloud(s) used to represent the foreground objects of the 3D scene are grouped by considering the 3D part from each viewpoint of the plurality. To avoid that a same point belongs to a plurality of groups, the grouping may be first done for the first viewpoint and the points that have been grouped according to the first viewpoint are not considered for the next grouping according to another viewpoint. An example of a group 61 of points is illustrated on figure 6, the points of the group 61 having a consistent depth, e.g. the depth of the points of the group 61 may be for example comprised between 2 m and 2.5 m, or between 3.2 m and 3.9 m (distance from the first viewpoint).

For each group of points, a patch is generated, the patch corresponding to a 2D parametrization of the group of points. For example, a patch 62 is generated from the group of points 61. One or more patches of each group of points may be generated to represent each group of points in two dimensions, i.e. according to the 2D parametrization. One or more 2D parametrizations may be obtained for each group of point 61. The 2D parametrization may vary from a group of points to another one. According to a variant, all 2D parametrizations associated with all groups of points are of the same type, e.g. a linear perspective projection or an orthographic projection. According to a variant, different 2D parametrizations may be used for a same group of points.

A 2D parametrization, e.g. 62, associated with a group of points, e.g. 61, corresponds to a browsing in 2 dimensions of the given 3D group of points of the point cloud allowing to sample the given 3D group of points, i.e. a 2D representation of the content (i.e. the point(s)) of this given 3D group of points comprising a plurality of samples (that may correspond to the pixels of a patch image), the number of which depending from the sampling step that is applied. A 2D parametrization may be represented with a set of parameters and may be obtained in many ways, for example by implementing any one of the following methods:
- equirectangular projection (ERP) of the points of the group of points of the point cloud onto a sphere associated with a viewpoint, the parameters representative of the ERP projection comprising the location of the sphere, its orientation and the spatial sampling step;
- linear perspective projection of the points of the group of points of the point cloud onto a plane associated with a viewpoint, the parameters representative of the linear perspective projection comprising the location of the virtual camera, the focal length, the spatial sampling step and the field of view in the 2 dimensions;
- orthographic projection of the points of the group of points of the point cloud onto a surface, the parameters representative of the orthographic projection comprising the geometry (shape, size and orientation) of the projecting surface and spatial sampling step;
- LLE (Locally-Linear Embedding) that corresponds to a mathematical operation of dimension reduction, here applied to convert/transform from 3D to 2D, the parameters representative of the LLE comprising the transformation coefficients.

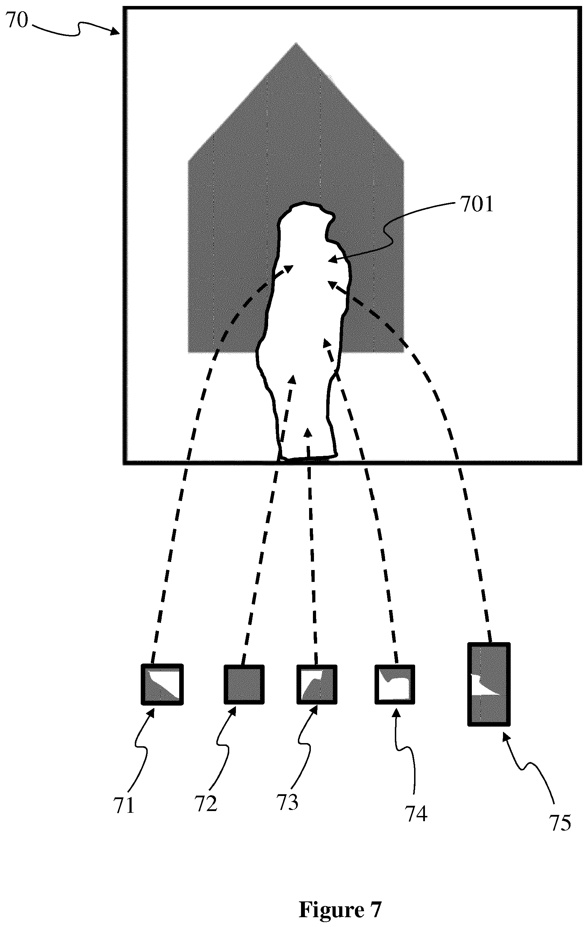

Each patch has advantageously a rectangular shape to ease the packing process in patch atlas, as described in reference to figure 7. Each patch may comprise geometry information obtained by the projection / 2D parametrization of the points of the associated group of points. Geometry information may correspond to depth information or information on the position of the points of the point cloud or of the vertices of a mesh element. A patch may further comprise the texture information associated with the points of the associated group of points. According to a variant, geometric patches comprising only geometry information are generated and texture patches comprising only texture information are further generated.

Mapping information that links each 2D parametrization with its associated patch may be generated. The mapping information may be generated to keep the connection between a 2D parametrization and the associated geometry patch and texture patch in the frames (e.g. the background image or the geometry patch atlas or the texture patch atlas) into which the patches are arranged. The mapping information may for example be of the form of:
{parameters of the 2D parametrization; geometry patch ID; texture patch ID}
wherein the geometry patch ID may be an integer value or a pair of values comprising the column index U and the row index V the geometry patch belongs to in the frame it is arranged; the texture patch ID may be an integer value or a pair of values comprising the column index U' and the row index V' the texture patch belongs to in the matrix of patches of the frame(s) (or of the tiles of the frame(s)) the patches belong to.

The same mapping information is generated for each 2D parametrization and associated geometry patch and texture patch. Such a mapping information enables to reconstruct the corresponding parts of the 3D scene by establishing the association of the 2D parametrization with corresponding geometry patch and texture patch. If the 2D parametrization is a projection, the corresponding part of the 3D scene may be reconstructed by de-projecting (performing the inverse projection) the geometry information comprised in the associated geometry patch and the texture information in the associated texture patch. The mapping information then corresponds to a list of mapping information:
{parameters of the 2D parametrization; geometry and texture patch ID}ᵢ, For i = 1 to n, with n the number of 2D parametrizations.

**Figure 7** shows the embedding of data representative of part(s) of foreground objects within an occluded area 701 of the background image, only a part 70 of the background image being represented, according to a non-restrictive embodiment of the present principles.

The location of the occluded 701 area is received from a memory or a storage device. The location of the occluded area may for example be determined by projecting the points of the foreground objects onto the background image according to a plurality of viewpoints of a space of view from which the foreground objects are acquired or visible. The range of viewpoints comprised in the space of view (e.g. the cube) 11 is for example discretized into the plurality of viewpoints (e.g., 5, 10 or 20 viewpoints). According to another example, the plurality of viewpoints is obtained from the space of view 11 by defining a tetrahedron centered on the first viewpoint 20, the four vertices of the tetrahedron each defining a viewpoint of the plurality of viewpoints in addition to the first viewpoint 20. To determine the location of the occluded area 701, the range of viewpoints from which the foreground objects are visible is centered onto the first viewpoint that also corresponds to the point of view of the background image. The location information may for example comprise the row and column indices of a reference pixel belonging to the occluded area 701 with the size in number of rows and lines of the area.

Depending on the size of the occluded area, data comprised in one or more patches 71, 72, 73, 74, 75 (such as the patch 62) may be added / embedded into the pixels of the occluded area 701. The patches 71, 72, 73, 74, 75 are each obtained by 2D parametrization of a group of points of the point cloud(s) representing the foreground objects, as described in reference to figure 6. A slim frontier between the original content of the background image (i.e. data representative of the background of the 3D scene) and data of the embedded patch(s) may remain free of added data to avoid compression artefacts. The patch(es) to be embedded into the occluded area(s) of the background image are for example according to the size of the area and to the size of the patch(es) to optimize the amount of data representative of the foreground objects added to the background image. According to a variant, the selection of the patch(es) is based on the visual importance of the patch(es) (for example the most (or the least) visually important patch(es) is(are) embedded into the background image). The visual importance of a patch may depend on its distance to the viewing point (the farther, the less important), and/or its angular location with respect to the principal viewing direction (far left, right, up or down patches are less important than central ones), and/or the occlusions (patches occluded from central viewing point are less important).

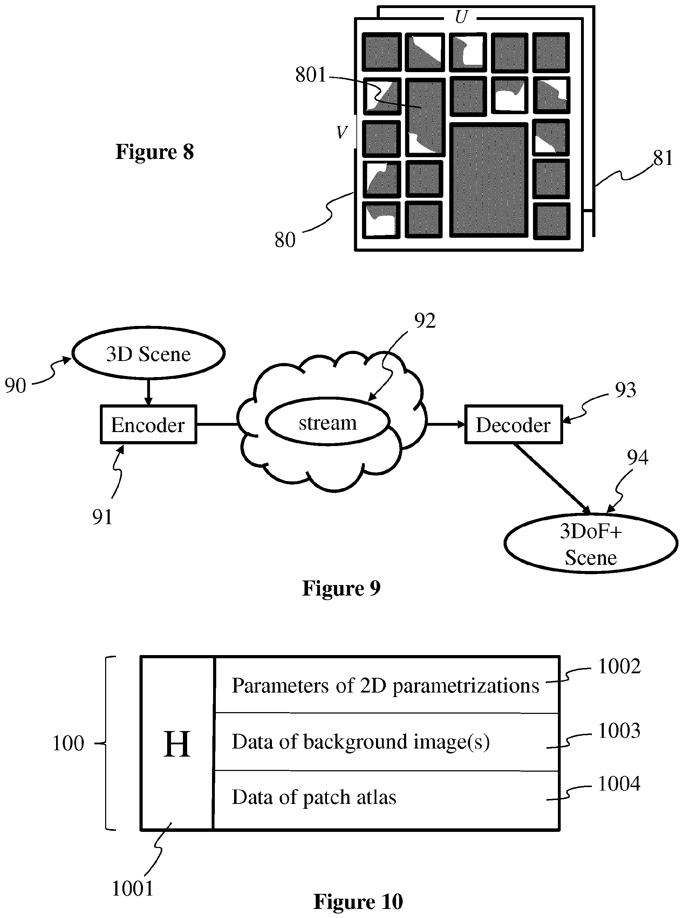

The patch(es) obtained by 2D parametrizations of groups of points of the point cloud(s) representing the foreground objects that have not been filled in the occluded area(s) of the background image may be packed in one or more patch atlas, as the ones described in reference to figure 8.

**Figure 8** shows patch atlas comprising attribute information of points of the foreground 3D object(s), according to a non-restrictive embodiment of the present principles. Figure 8 illustrates a first patch atlas 80 corresponding for example to a geometry patch atlas and a second patch atlas 81 corresponding foo example to a texture patch atlas. The first patch atlas 80 and the second patch atlas 81 may be seen as images with a same resolution, i.e. with a same number of pixels arranged in a matrix fashion with K columns and L rows, K and L being integer, or with different resolutions (different number of pixels). The geometry patches 801 comprising depth information and the texture patches comprising texture information are arranged in the first patch atlas 80 and in the second patch atlas 81, respectively, except for the patch(es) (geometry and/or texture patch(es)) arranged in the occluded area(s) of the background image. Each patch comprises a subset of pixels of the image representing either the first patch atlas 80, the second patch atlas 81, or the background image.

**Figure 9** shows a non-limitative example of the encoding, transmission and decoding of data representative of 3D scene, according to a non-restrictive embodiment of the present principles.

Data 90 representative of a 3D scene is encoded in a stream 92 by an encoder 91. The stream 92 comprises a first element of syntax carrying data representative of a background image (including data representative of the background and data of one or more patches associated with one or more parts of the foreground object(s)) and at least a second element of syntax carrying data representative of the foreground object, for example under the form of patch atlas.

The encoder 91 is for example compliant with an encoder such as:
- HEVC (its specification is found at the ITU website, T recommendation, H series, h265, http://www.itu.int/rec/T-REC-H.265-201612-I/en);
- 3D-HEVC (an extension of HEVC whose specification is found at the ITU website, T recommendation, H series, h265, http://www.itu.int/rec/T-REC-H.265-201612-I/en annex G and I);
- VP9 developed by Google; or
- AV1 (AOMedia Video 1) developed by Alliance for Open Media.

A decoder 93 obtains the stream 92 from a source. For example, the source belongs to a set comprising:
- a local memory, e.g. a video memory or a RAM (or Random-Access Memory), a flash memory, a ROM (or Read Only Memory), a hard disk;
- a storage interface, e.g. an interface with a mass storage, a RAM, a flash memory, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

The decoder 93 decodes the first element of syntax of the stream 92 for 3DoF+ rendering 94 of the 3D scene (or at least a part of the 3D scene).

The decoder 93 is compliant with the encoder 91, for example compliant with a decoder such as:
- HEVC;
- 3D-HEVC (an extension of HEVC);
- VP9; or
- AV1.

**Figure 10** shows a non-limiting example of an embodiment of the syntax of a stream carrying the information and data representative of the 3D scene when the data are transmitted over a packet-based transmission protocol. Figure 10 shows an example structure 100 of a volumetric video stream. The structure consists in a container which organizes the stream in independent elements of syntax. The structure may comprise a header part 1001 which is a set of data common to every syntax elements of the stream. For example, the header part comprises metadata about syntax elements, describing the nature and the role of each of them. The header part may also comprise the coordinates of the viewpoints used for the encoding of the data representative of the 3D scene and information about the size and the resolution of the background image, geometry patch atlas and/or texture patch atlas. The structure comprises a payload comprising a first element of syntax 1002, a second element of syntax 1003 and a third element of syntax 1004. The first syntax element 1002 is relative to the parameters defining the 2D parametrizations. The second element of syntax 1003 is relative to the data representative of the background and to the data representative of attributes of the points of the foreground object(s) comprised in the occluded area(s) of the background image. The third element of syntax 1004 is relative to the data representative of the first patch atlas and the second patch atlas. The data representative of the first patch atlas may comprise information regarding the pixels that are comprised in each depth map (for example coordinates of a reference pixel of the depth map, e.g. coordinates of the top left pixel, with the width of the depth map expressed in number of pixels with the height of the depth map expressed in number of pixels). The data representative of the second patch atlas may comprise information regarding the pixels that are comprised in each color map (for example coordinates of a reference pixel of the color map, e.g. coordinates of the top left pixel, with the width of the depth map expressed in number of pixels and the height of the color map expressed in number of pixels).

For illustration purpose, in the context of ISOBMFF file format standard, texture patches, geometry patches and the metadata would typically be referenced in ISOBMFF tracks in a box of type moov, with the texture data and geometry data themselves embedded in media-data box of type mdat.

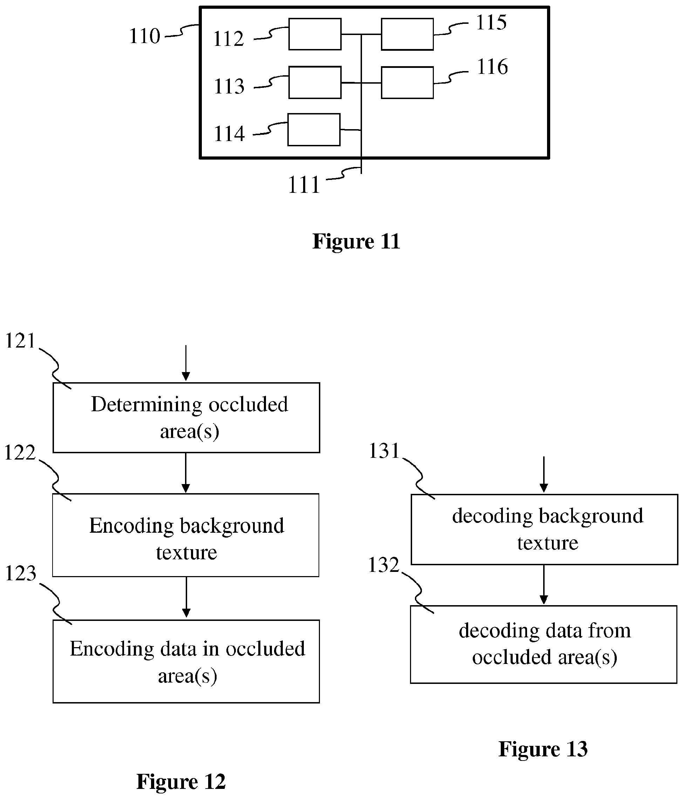

**Figure 11** shows an example architecture of a device 110 which may be configured to implement a method described in relation with figures 12 and/or 13. The device 110 may be configured to be an encoder 91 or a decoder 93 of figure 9.

The device 110 comprises following elements that are linked together by a data and address bus 111:
- a microprocessor 112 (or CPU), which is, for example, a DSP (or Digital Signal Processor);
- a ROM (or Read Only Memory) 113;
- a RAM (or Random-Access Memory) 114;
- a storage interface 115;
- an I/O interface 116 for reception of data to transmit, from an application; and
- a power supply, e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 113 comprises at least a program and parameters. The ROM 113 may store algorithms and instructions to perform techniques in accordance with present principles. When switched on, the CPU 112 uploads the program in the RAM and executes the corresponding instructions.

The RAM 114 comprises, in a register, the program executed by the CPU 112 and uploaded after switch-on of the device 110, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder 91 of figure 9, the three-dimension scene is obtained from a source. For example, the source belongs to a set comprising:
- a local memory (113 or 114), e.g. a video memory or a RAM (or Random-Access Memory), a flash memory, a ROM (or Read Only Memory), a hard disk;
- a storage interface (115), e.g. an interface with a mass storage, a RAM, a flash memory, a ROM, an optical disc or a magnetic support;
- a communication interface (116), e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

In accordance with examples of the decoding or decoder(s) 93 of figure 9, the stream is sent to a destination; specifically, the destination belongs to a set comprising:
- a local memory (113 or 114), e.g. a video memory or a RAM, a flash memory, a hard disk;
- a storage interface (115), e.g. an interface with a mass storage, a RAM, a flash memory, a ROM, an optical disc or a magnetic support; and
- a communication interface (116), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi® or a Bluetooth ® interface).

In accordance with examples of encoding or encoder, a bitstream comprising data representative of the volumetric scene is sent to a destination. As an example, the bitstream is stored in a local or remote memory, e.g. a video memory or a RAM, a hard disk. In a variant, the bitstream is sent to a storage interface, e.g. an interface with a mass storage, a flash memory, ROM, an optical disc or a magnetic support and/or transmitted over a communication interface, e.g. an interface to a point to point link, a communication bus, a point to multipoint link or a broadcast network.

In accordance with examples of decoding or decoder or renderer 93 of figure 9, the bitstream is obtained from a source. Exemplarily, the bitstream is read from a local memory, e.g. a video memory, a RAM, a ROM, a flash memory or a hard disk. In a variant, the bitstream is received from a storage interface, e.g. an interface with a mass storage, a RAM, a ROM, a flash memory, an optical disc or a magnetic support and/or received from a communication interface, e.g. an interface to a point to point link, a bus, a point to multipoint link or a broadcast network.

In accordance with examples, the device 110 is configured to implement a method described in relation with figures 12 and/or 13, and belongs to a set comprising:
- a mobile device;
- a communication device;
- a game device;
- a tablet (or tablet computer);
- a laptop;
- a still picture camera;
- a video camera;
- an encoding chip;
- a server (e.g. a broadcast server, a video-on-demand server or a web server).

**Figure 12** illustrates a method for encoding data representative of a 3D scene, for example the 3D scene 10, according to a non-restrictive embodiment of the present principles. The method may for example be implemented in the encoder 91 and/or in the device 110. The different parameters of the device 110 may be updated. The 3D scene may for example be obtained from a source, one or more points of view may be determined in the space of the 3D scene, parameters associated with projection mapping(s) may be initialized.

In a first operation 121, information representative of one or more areas of a background image that are occluded by foreground objects is obtained. The background image is a flat view (i.e. without parallax, i.e. with only texture information and no geometric information). The information is for example received from a memory or storage device or the information is determined by processing the data representative of the foreground objects with the background image. The information may for example correspond to the location of the occluded areas within the background image (for example the row and column indices of a reference pixel of each occluded area with the size in number of rows and lines of the area). The information may for example be determined by projecting the points of the foreground objects onto the background image according to a plurality of viewpoints of a space of view from which the foreground objects are acquired or visible. The range of viewpoints comprised in the space of view (e.g. the cube) 11 is for example discretized into the plurality of viewpoints (e.g., 5, 10 or 20 viewpoints). According to another example, the plurality of viewpoints is obtained from the space of view 11 by defining a tetrahedron centered on the first viewpoint 20, the four vertices of the tetrahedron each defining a viewpoint of the plurality of viewpoints in addition to the first viewpoint 20. The range of viewpoints from which the foreground objects are visible is centered onto the first viewpoint that also corresponds to the point of view of the background image.

In a second operation 122, data representative of the texture of the part of the background image that is not occluded by foreground object (i.e. the data of the pixels of the background image that may be seen by at least one viewpoint of the range of points of view) is encoded or formatted into the corresponding pixels (i.e. the pixels that are not occluded by a foreground object) of the image representative of the background of the 3D scene, according to a determined format, for example according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265" or according to AV1. The background image may for example be encoded into a frame of a track of a container, the container corresponding for example to an ISOBMFF (ISO Base Media File Format, ISO/IEC 14496-12-MPEG-4 Part 12) file. The data comprises for example metadata and signalling information pointing to a first syntax element of a bitstream that comprises the texture information encoded into pixels of the background image / frame.

In a third operation 123, data representative of attributes (e.g. depth and/or texture) of points of at least a part of the point cloud(s) used to represent the foreground object(s) is encoded into pixels of the occluded area(s) of the background image / frame. The data corresponds for example to the data comprised in one or more patches obtained by 2D parametrization of one or more groups of points of the point cloud(s). The data may be geometry (depth) and/or texture data. The encoding is for example according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265" or according to AV1. The patch(es) to be embedded into the occluded area(s) of the background image are for example according to the size of the area and to the size of the patch(es) to optimize the amount of data representative of the foreground objects added to the background image. According to a variant, the selection of the patch(es) is based on the visual importance of the patch(es) (for example the most (or the least) visually important patch(es) is(are) embedded into the background image). The visual importance of a patch may depend on its distance to the viewing point (the farther, the less important), and/or its angular location with respect to the principal viewing direction (far left, right, up or down patches are less important than central ones), and/or the occlusions (patches occluded from central viewing point are less important).

In a further optional operation, data representative of attributes of the points of the 3D point cloud that have not been encoded at operation 123 is encoded in a first and/or second patch atlas. This operation may not be implemented when the size of the occluded area(s) of the background image is such that each patch of attributes data of the foreground object may be embedded in the occluded area(s) and/or when the amount of attributes data of the foreground object is such that all attributes data may be embedded in the occluded area(s).

According to an optional variant, the data encoded at operations 122 and 123 form a bitstream that is transmitted to a decoder or to a renderer comprising a decoder.

**Figure 13** illustrates a method for decoding data representative of a 3D scene, for example the 3D scene 10, according to a non-restrictive embodiment of the present principles. The method may for example be implemented in the decoder 93 and/or in the device 110.

In a first operation 131, the data representative of the texture of the background image is decoded from pixels of the part of the background image that is not occluded by any foreground object, i.e. the pixels that do not belong to the occluded area(s) obtained at operation 121.

In a second operation 132, the data representative of attributes of some points of the point cloud(s) representing the foreground object(s) is decoded from pixels belonging to the occluded area(s) of the background image.

In a further optional operation, data representative of attributes of the points of the 3D point cloud is decoded from the first and/or the second patch atlas, if any.

According to a further optional variant, a representation of the 3D scene is rendered and/or displayed from the decoded data.

Naturally, the present disclosure is not limited to the embodiments previously described.

In particular, the present disclosure is not limited to a method and device for encoding/decoding data representative of a 3D scene but also extends to a method for generating a bitstream comprising the encoded data and to any device implementing this method and notably any devices comprising at least one CPU and/or at least one GPU.

The present disclosure also relates to a method (and a device configured) for displaying images rendered from the decoded data of the bitstream.

The present disclosure also relates to a method (and a device configured) for transmitting and/or receiving the bitstream.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of encoding data representative of a 3D scene (10), said 3D scene being represented with an image comprising data representative of texture of the background of said 3D scene (301) and with points of a 3D point cloud (51), said 3D point cloud representing at least a foreground object (302) of said 3D scene as seen from a plurality of viewpoints of a range of points of view (11), the method comprising:
- obtaining (121) at least an area (701) of said image occluded by a projection of said points according to said plurality of viewpoints;
- encoding (122) data representative of texture of pixels (301) of said image except for pixels belonging to said at least an area (701);
- encoding (123) data representative of attributes of points of at least a part of the 3D point cloud in pixels belonging to said at least an area (701).

2. A device (110) configured to encode data representative of a 3D scene (10), said 3D scene being represented with an image comprising data representative of texture of the background of said 3D scene and with points of a 3D point cloud, said 3D point cloud representing at least a foreground object of said 3D scene as seen from a plurality of viewpoints of a range of points of view, the device comprising a memory (114) associated with at least one processor (112) configured to:
- obtain at least an area of said image occluded by a projection of said points according to said plurality of viewpoints;
- encode data representative of texture of pixels of said image except for pixels belonging to said at least an area;
- encode data representative of attributes of points of at least a part of the 3D point cloud in pixels belonging to said at least an area.

3. The method according to claim 1 or the device according to claim 2, wherein said data representative of attributes comprises depth information and/or texture information.

4. The method according to one of claims 1 and 3, or the device according to one of claims 2 to 3, wherein said data representative of attributes is obtained according to parameters representative of a two-dimensional parametrization of said at least a part of the 3D point cloud, said two-dimensional parametrization being responsive to geometric information associated with said at least a part of the 3D point cloud and to pose information associated with at least a viewpoint of the plurality of viewpoints.

5. The method according to one of claims 1, 3 and 4 or the device according to one of claims 2 to 4, wherein data representative of attributes of the points of the 3D point cloud but the points of said at least a part of the 3D point cloud is encoded in at least a patch atlas (80, 81), said at least a patch atlas comprising patches (801), each patch comprising a part of said attributes, each patch being associated with a part of said 3D point cloud.

6. The method according to one of claims 1, 3, 4 and 5 or the device according to one of claims 2 to 5, wherein a mapping information representative of a mapping between an information identifying said at least a part of the 3D point cloud to said pixels belonging to said at least an area is encoded.

7. A method of decoding data representative of a 3D scene (10), the method comprising:
- decoding (131) data representative of texture from pixels of an image except for pixels belonging to at least an area of said image, said data representative of texture corresponding to texture information of the background of a 3D scene, said at least an area corresponding to at least a part of said image occluded by a projection of points of a 3D point cloud, said 3D point cloud representing at least a foreground object of said 3D scene as seen from a plurality of viewpoints of a range of points of view;
- decoding (132) data representative of attributes of points of at least a part of the 3D point cloud from pixels belonging to said at least an area.

8. A device (110) configured for decoding data representative of a 3D scene, the device comprising a memory (114) associated with at least one processor (112) configured to:
- decode data representative of texture from pixels of an image except for pixels belonging to at least an area of said image, said data representative of texture corresponding to texture information of the background of a 3D scene, said at least an area corresponding to at least a part of said image occluded by a projection of points of a 3D point cloud, said 3D point cloud representing at least a foreground object of said 3D scene as seen from a plurality of viewpoints of a range of points of view;
- decode data representative of attributes of points of at least a part of the 3D point cloud from pixels belonging to said at least an area.

9. The method according to claim 7 or the device according to claim 8, wherein said data representative of attributes comprises depth information and/or texture information.

10. The method according to one of claims 7 and 9, or the device according to one of claims 8 to 9, wherein at least a parameter representative of a two-dimensional parametrization of said at least a part of the 3D point cloud is decoded, said two-dimensional parametrization being responsive to geometric information associated with said at least a part of the 3D point cloud and to pose information associated with at least a viewpoint of the plurality of viewpoints.

11. The method according to one of claims 7, 9 and 10 or the device according to one of claims 8 to 10, wherein data representative of attributes of the points of the 3D point cloud but the points of said at least a part of the 3D point cloud is decoded from at least a patch atlas (80, 81), said at least a patch atlas comprising patches (801), each patch comprising a part of said attributes, each patch being associated with a part of said 3D point cloud.

12. The method according to one of claims 7 and 9 to 11 or the device according to one of claims 8 to 11, wherein a mapping information representative of a mapping between an information identifying said at least a part of the 3D point cloud to said pixels belonging to said at least an area is decoded.

13. A bitstream carrying data representative of a 3D scene, the data comprising, in a first part of an image, data representative of texture from pixels of an image except for pixels belonging to at least an area of said image, said data representative of texture corresponding to texture information of the background of a 3D scene, said at least an area corresponding to at least a second part of said image occluded by a projection of points of a 3D point cloud, said 3D point cloud representing at least a foreground object of said 3D scene as seen from a plurality of viewpoints of a range of points of view, and in at least the second part of the image, data representative of attributes of points of at least a part of the 3D point cloud from pixels belonging to said at least an area.

14. A non-transitory processor readable medium having stored therein instructions for causing a processor to perform at least the steps of the method according to one of claims 1 and 3 to 6.

15. A non-transitory processor readable medium having stored therein instructions for causing a processor to perform at least the steps of the method according to claim 7 and 9 to 12.
